(19) Europäisches Patentamt
European Patent Office
Office européen des brevets

(11) Publication number: **0 528 919 B1**

(12) # EUROPEAN PATENT SPECIFICATION

(45) Date of publication of patent specification: **31.08.94**

(51) Int. Cl.$^5$: **C08F 2/42**, C08C 19/44

(21) Application number: **91909479.7**

(22) Date of filing: **13.05.91**

(86) International application number:
**PCT/EP91/00899**

(87) International publication number:
**WO 91/18025 (28.11.91 91/27)**

(54) **TERMINATION OF ANIONIC POLYMERIZATION.**

(30) Priority: **14.05.90 US 522693**
**15.04.91 US 685111**

(43) Date of publication of application:
**03.03.93 Bulletin 93/09**

(45) Publication of the grant of the patent:
**31.08.94 Bulletin 94/35**

(84) Designated Contracting States:
**BE CH DE ES FR GB GR IT LI NL SE**

(56) References cited:
**FR-A- 2 536 752**
**GB-A- 1 243 702**
**GB-A- 2 118 952**
**US-A- 4 284 741**
**GB-A- 1 162 780**
**GB-A- 1 539 905**
**US-A- 3 644 567**

**Databse Chemical Abstracts (HOST:STN) AN:CA112(8): 58054t (Columbus, Ohio, US) & JP A 1217011**

(73) Proprietor: **SHELL INTERNATIONALE RESEARCH MAATSCHAPPIJ B.V.**
**Carel van Bylandtlaan 30**
**NL-2596 HR Den Haag (NL)**

(72) Inventor: **GIBLER, Carma, Joleen**
**410 Southchester Lane**
**Houston, TX 77079 (US)**
Inventor: **CHAMBERLAIN, Linda, Rae**
**2010 Thompson Crossing**
**Richmond, TX 77469 (US)**
Inventor: **BROWNSCOMBE, Thomas, Fairchild**
**2737 Amherst**
**Houston, TX 77005 (US)**
Inventor: **STEVENS, Craig, Aldred**
**19515 Mills Meadow Lane**
**Houston, TX 77094 (US)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).



Rank Xerox (UK) Business Services
(3.10/3.09/3.3.3)

## Description

This invention relates to an improvement in the long used method of making block copolymers from conjugated diolefins and/or alkenyl aromatic hydrocarbons. The improvement comprises utilizing hydrogen or its isotopes to terminate the anionic polymerization.

Anionic polymerization utilizing organo alkali metal initiators has long been used to polymerize conjugated diolefins such as butadiene and isoprene and to copolymerize such diolefins with styrene and substituted styrenes to make styrene-butadiene-styrene (S-B-S) and styrene-isoprene-styrene (S-I-S) block copolymers and similar block copolymers. The polymerization to form these latter block copolymers has been depicted hereinafter for exemplary purposes. This reaction is usually carried out in an inert hydrocarbon solvent such as cyclohexane or toluene and it is necessary to rigorously exclude oxygen, water or any impurity that can react with the highly reactive propagating species. Under these conditions the polymeric molecular weights can be precisely controlled. The preferred initiators are organolithiums, although others can be used. Two commonly used methods are:

1. Sequential. i.e., start polymerization at one end of the molecule and continue to the other.
2. Coupling. i.e., start polymerization at each end of the molecule and then join the reactive chains together by a coupling or a linking agent.

In these polymerization methods, sec-butyl lithium is the preferred initiator because it initiates the polymerization very readily. That is to say, the rate of the initiation reaction is high compared to that of the subsequent polymerization. This initiator first reacts with one molecule of styrene monomer. This is known as the initiation reaction.

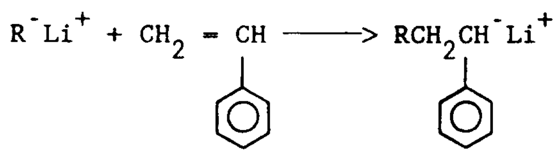 (1)

The product can then continue polymerization of the styrene and this is known as the propagation reaction.

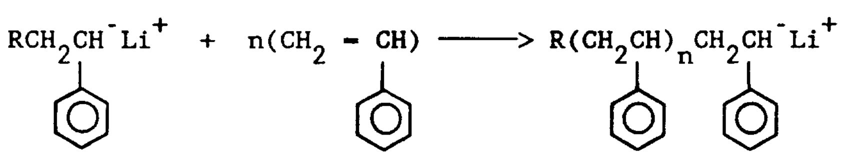 (2)

The new end product is termed polystyryl lithium (the effects of the terminal sec-butyl radical are ignored) and it is denoted as $S^-Li^+$. If a diene (in this case butadiene) is added, the $S^-Li^+$ can initiate further polymerization:

$$S^-Li^+ + n(CH_2=CHCH=CH_2) \rightarrow S(CH_2CH=CHCH_2)_{n-1}CH_2CH=CHCH_2{}^-Li^+ \quad (3)$$

For the above reaction the product is denoted $S\text{-}B^-Li^+$. It also is an initiator, so that if more styrene monomer is now added, it will polymerize onto the "living" end of the polymer chain:

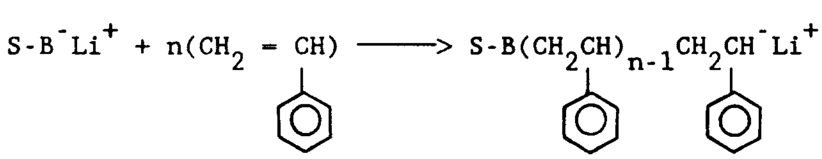 (4)

When this last reaction is complete, the product ($S\text{-}B\text{-}S^-Li^+$-polystyryl lithium) can be inactivated by the addition of a protonating species such as an alcohol. This terminates the reaction:

$$S\text{-}B\text{-}S^-Li^+ + ROH \rightarrow S\text{-}B\text{-}SH + ROLi \quad (5)$$

If the polymer is to be made by coupling, the first three reactions shown hereinbefore are unchanged, but instead of the $S\text{-}B^{-}Li^{+}$ initiating further polymerization of styrene, in this case it is reacted with a coupling agent:

$$2S\text{-}B^{-}Li^{+} + X\text{-}R\text{-}X \rightarrow S\text{-}B\text{-}R\text{-}B\text{-}S + 2LiX \qquad (6)$$

Many coupling agents have been described, including esters, organohalogens and silicon halides. The example above shows the reaction of difunctional coupling agents but those of higher functionality (for example $SiCl_4$) can also be used and give branched or star-shaped molecules $(S\text{-}B)_nx$. There are cases whereby the coupling agent is not incorporated in the polymer. If divinyl benzene is added at the end of the reaction the products are highly branched, i.e., the value of n is very large. This reaction can also be terminated with an alcohol. It is necessary to terminate the living polymer to prevent crosslinking and unwanted coupling reactions, and hence formation of high molecular weight polymer, which results in unsatisfactory physical properties and performance.

The use of alcohol results in formation of alkali metal alkoxides and excess alcohol impurities. The excess alcohol and alkali metal alkoxides adversely affect the activity of some hydrogenation catalysts in the downstream hydrogenation step should hydrogenation of the polymer be desired. Additionally, residual alcohol in the polymerization reactor deactivates part of the initiator or of the living polymer in the next batch which can lead to poor molecular weight control through the formation of intermediate molecular weight material and/or polystyrene homopolymer. Also, in using methanol as a polymerization termination agent it is required that the majority of methanol be removed from recycled solvents creating waste effluent which must be disposed of. Thus, there is a need for a method of terminating the polymerization of these living polymers which would not result in the formation of alkali metal alkoxides and excess alcohol in the system. The termination step of the present invention is clean and efficient, and produces a cement free of deleterious impurities.

The present invention provides a solution to the problems of polymerization termination using alcohols. The invention relates to a process for making polymers of any anionically polymerizable monomer, especially conjugated diolefins and particularly copolymers of conjugated diolefins and alkenyl aromatic hydrocarbons, which comprises anionically polymerizing the monomers with an organo alkali metal polymerization initiator in a suitable solvent thereby creating a living polymer. The improvement comprises terminating the polymerization by the addition of hydrogen or its isotopes as a terminating agent, which reacts with the living polymer to end the polymer chain. It is preferred that the alkali metal initiator be an organo lithium compound and, in most cases, the preferred organo lithium compound is sec-butyl lithium.

Any anionically polymerizable monomer which forms an anion strong enough to react with these terminating agents should be effective in this invention. Particular monomers which can be used include acrylamides, acrylonitriles, nitrobutene, vinylisocyanate, anhydrides, methacrylates, including methyl mothacrylate, alkyl and aryl acrylates, vinyl pyridines, carbodiimides, lactams, dienes and styrene and styrene derivatives including alkylstyrenes, halogenated methoxy styrenes and nitrostyrene, as well as 1,3 pentadiene and 1,3-octadiene.

As is well known, polymers containing both aromatic and ethylenic unsaturation can be prepared by copolymerizing one or more polyolefins, particularly a diolefin, by themselves or with one or more alkenyl aromatic hydrocarbon monomers. The copolymers may, of course, be random, tapered, block, star, radial or a combination of these. When the double bonds in the polyolefin are separated by three or more carbon atoms, the ethylenic unsaturation incorporated into the polymer will be contained in a branch extending outwardly from the main polymer chain but when the polyolefin is conjugated at least a portion of the ethylenic unsaturation incorporated into the polymer may be contained in the polymer backbone.

As is well known, polymers containing ethylenic unsaturation or both aromatic and ethylenic unsaturation may be prepared using anionic initiators or polymerization catalysts. Such polymers may be prepared using bulk, solution or emulsion techniques. In any case, the polymer containing at least ethylenic unsaturation will, generally, be recovered as a solid such as a crumb, a powder, a pellet or the like. Polymers containing ethylenic unsaturation and polymers containing both aromatic and ethylenic unsaturation are, of course, available commercially from several suppliers.

In general, when solution anionic techniques are used, anionically polymerizable monomers including conjugated diolefin polymers and copolymers of conjugated diolefins and alkenyl aromatic hydrocarbons are prepared by contacting the monomer or monomers to be polymerized simultaneously or sequentially with an anionic polymerization initiator. Such initiators include Group IA metals, their alkyls, amides, silanolates, naphthalides, biphenyls and anthracenyl derivatives. It is preferred to use an organoalkali metal compound in a suitable solvent at a temperature within the range from -150 °C to 300 °C, preferably at a

temperature within the range from 0 °C to 100 °C. Particularly effective anionic polymerization initiators are organolithium compounds having the general formula:

$RLi_n$

wherein:

R is an aliphatic, cycloaliphatic, aromatic or alkyl-substituted aromatic hydrocarbon radical having from 1 to 20 carbon atoms; and n is an integer of 1 to 4.

Conjugated diolefins which may be polymerized anionically include those conjugated diolefins containing from 4 to 12 carbon atoms such as 1,3-butadiene, isoprene, 1,3-pentadiene, 1,3-octadiene, piperylene, methylpentadiene, phenylbutadiene, 3,4-dimethyl-1,3-hexadiene, 4,5-diethyl-1,3-octadiene and the like. Conjugated diolefins containing from 4 to 8 carbon atoms are preferred for use in such polymers and in particular butadiene and/or isoprene.

Alkenyl aromatic hydrocarbons which may be copolymerized include vinyl aryl compounds, such as styrene, various alkyl-substituted styrenes, alkoxy-substituted styrenes, 2-vinyl pyridine, 4-vinyl pyridine, vinyl naphthalene, alkyl-substituted vinyl naphthalenes and the like, of which styrene is preferred.

In general, any of the solvents known in the prior art to be useful in the preparation of such polymers may be used. Suitable solvents include cycloaliphatic hydrocarbons such as cyclopentane, cyclohexane, cycloheptane and the like, as well as, alkyl-substituted derivatives thereof; aromatic and alkyl-substituted aromatic hydrocarbons such as benzene, naphthalene, toluene, xylene and the like; hydrogenated aromatic hydrocarbons such as tetralin, decalin and the like; linear and cyclic ethers such as methyl ether, methyl ethyl ether, diethyl ether, tetrahydrofuran and the like.

Conjugated diolefin polymers and conjugated diolefin- alkenyl aromatic copolymers which may be used in the present invention include those copolymers described in U.S. Patents Nos. 3,135,716; 3,150,209; 3,496,154; 3,498,960; 4,145,298 and 4,238,202. Conjugated diolefin-alkenyl aromatic hydrocarbon copolymers which may be treated in accordance with this invention also include block copolymers such as those described in U.S. Patent Nos. 3,231,635; 3,265,765 and 3,322,856. In general, linear and branched block copolymers which may be treated in accordance with the present invention include those which may be represented by the general formula:

$A_z\text{-}(B\text{-}A)_y\text{-}B_x$

wherein:

A is a linear or branched polymeric block comprising predominantly monoalkenyl aromatic hydrocarbon monomer units;

B is a linear or branched polymeric block containing predominantly conjugated diolefin monomer units;

x and z are, independently, a number equal to 0 or 1;

y is a whole number ranging from 0 to 15, and the sum of $x+z+y \geqq 2$.

Polymers which may be treated in accordance with this invention also include coupled and radial block copolymers such as those described in U.S. Patent Nos. 4,033,888; 4,077,893; 4,141,847; 4,391,949 and 4,444,953. Coupled and radial block copolymers which may be treated in accordance with the present invention include those which may be represented by the general formula:

$[B_x\text{-}(A\text{-}B)_y\text{-}A_z]_n\text{-}C\text{-}P_{n'}$

wherein:

A, B, x, y and z are as previously defined; n and n' are, independently, numbers from 1 to 100 such that $n+n' \geqq 3$;

C is the core of the coupled or radial polymer formed with a polyfunctional coupling agent; and

each P is the same or a different polymer block or polymer segment having the general formula:

$B'_{x'}\text{-}(A'\text{-}B'')_{y'}\text{-}A''_{z'}$

wherein:

A'' is a polymer block containing predominantly monoalkenyl aromatic hydrocarbon monomer units;

B' is a polymer block containing predominantly conjugated diolefin monomer units;

A'-B'' is a polymer block containing monoalkenyl aromatic hydrocarbon monomer units (A') and conjugated diolefin monomer units (B''), the A'-B'' monomer units may be random, tapered or block and

when A'-B'' is block, the A' block may be the same or different from A'' and B'' may be the same or different from B';

x' and z' are, independently, numbers equal to 0 or 1; and

y' is a number from 0 to 15, with the proviso that the sum of $x' + y' + z \geq 1$.

The radial polymers may, then, be symmetric or asymmetric.

In the production of all of the polymers described above, the polymerization may be terminated by utilizing the described terminating agents in place of the conventionally used alcohol terminating agent. The living polymer, or more accurately, the living end of the polymer chain, is terminated by the addition of the terminating agent thereto. This termination reaction takes place instead of reaction number (5) shown above.

Lithium chloride, lithium boride, lithium hydride, lithium amide, lithium cyclopentadienide, etc. may be formed during the termination process. They are not expected to be reactive polymerization initiators. They are somewhat inert toward anionic polymerization and will not interfere with the molecular weight control of the next polymerization batch as alcohol can.

As stated above, the terminating agents which may be used to terminate the anionic polymerization according to the present invention are hydrogen or its isotopes.

The termination reaction may be performed using several techniques. After the polymerization of the living polymer is complete, the living polymer is contacted with the terminating agent, i.e. hydrogen or an isotope thereof, to provide terminated polymer. The contact of the living polymer and hydrogen or its isotopes is typically performed in a well-mixed reactor, where the living polymer is dissolved in a suitable solvent. Hydrogen or its isotopes may be applied as gases, liquids or solids. Addition of gaseous hydrogen or an isotope thereof to a reactor holding a living-polymer solution may be facilitated by bubbling the gas through the solution or by adding a solution of gas dissolved in an appropriate solvent. Hydrogen or an isotope thereof may also be added to the living-polymer solution by adding it directly to the reactor as a solution in an appropriate solvent. The addition in a solid form to the living-polymer solution may be performed by adding the solid into the reactor, by adding a solid/solvent slurry or by adding a solution of the solid dissolved in an appropriate solvent.

Hydrogen, or an isotope thereof, in a solid form may for instance be accomplished by a material which gives off hydrogen, or an isotope thereof, upon decomposition.

When this improvement is used, the problems of using alcohol, i.e. the formation of lithium alkoxides and excess alcohol impurities, are avoided. However, the advantages of polymer termination by the alcohol method are obtained.

According to the process of the present invention the polymerization is terminated by addition of hydrogen or its isotopes (e.g. deuterium). In this case, the living polymer or more accurately, the living end of the polymer chain, is terminated by the addition of hydrogen thereto.

Using an S-B-S block copolymer for exemplary purposes, the presumed reaction is as follows:

$$\text{S-B-S}^{-}\text{Li}^{+} + \text{H}_2 \rightarrow \text{S-B-SH} + \text{LiH} \qquad (7)$$

As shown above, lithium hydride may be formed during the termination process. It is not expected to be a reactive polymerization initiator. It has been found to be inert toward anionic polymerization and not to interfere with the molecular weight control of the next polymerization batch as alcohol did.

For this embodiment it is usually advisable to contact and vigorously mix hydrogen with the polymerization solution at the end of the polymerization reaction. This contact can be effected by adding the hydrogen gas through spargers in a mixing vessel containing polymer solution. The time of contact should be at least ten seconds and preferably twenty minutes to allow sufficient contact time for the reaction to occur. This is dependent upon the efficiency of the gas contacting equipment, gas solubility, solution viscosity and temperature. Alternatively, a continuous system could be employed whereby hydrogen is pumped into a solution prior to going to a statically mixed plug flow reactor. Hydrogen could also be dissolved in an appropriate solution and added to the polymer solution to be terminated. Another method would be to cause hydrogen to be absorbed into an absorption bed and then causing the unterminated polymer cement to flow through absorption beds containing hydrogen. The hydrogen contact could be carried out by adding to the polymer a material which gives off hydrogen when it decomposes (i.e. diimide) and causing the hydrogen-releasing material to decompose.

Several methods may be employed to verify the termination of living polymer. One method is based on the colour of the living polystyryl lithium, typically a deep orange colour. When the living polystyryl lithium is terminated with methanol, for example, the colour is extinguished. A second method is based on the addition of styrene monomer to the living polymer chain. If the living polymer anion is sufficiently active to promote styrene polymerization, the addition of styrene monomer will provide a deep orange colour of living

polystyryl lithium. A third method of verifying the termination of living polymer is based on gel permeation chromatography. If the polymer has not been fully terminated, the results from the gel permeation chromatography show a large amount of high-molecular-weight polymer with a broad molecular weight distribution. The absence of high-molecular-weight polymer indicates that the polymer was fully terminated.

Preferably the polymerization process using hydrogen as the terminating agent is carried out at a temperature of 0-200 °C, more preferably 60-80 °C. The pressure to be applied preferably lies within the range of 0.07-138 bar, more preferably 2.7-7 bar.

Examples 1-9

Homopolybutadiene, homopolyisoprene, polyisoprene-polystyrene and polystyrene-polybutadiene-polystyrene block copolymers were terminated with hydrogen. Typically, at the end of the polymerization reaction, the living polymer cement was sparged with hydrogen gas (1.0 SCFM) from 5 to 60 minutes and vigorously mixed. Generally, the temperature of the polymer cement was 60 °C and no increase in temperature was observed during the termination step. During the sparging stage of the reaction, the total pressure in the reactor ranged from 3 to 7 bar (40 to 100 psig) of hydrogen. Termination was confirmed by four independent methods. The first of these was a simple colorimetric examination of the polymer cement. Styryllithium living ends have an absorption maximum at 328 mμ and thus have a distinct orange colour which turn colourless when the living ends are terminated. This was observed in hydrogen termination as samples were pulled from the reactor and visually, as well as colorimetrically, examined for colour change. The second method for determining termination was gel permeation chromatography (GPC). Analysis of the hydrogen terminated polymers by GPC showed that there was no high molecular weight polymer (HMP) formed. The absence of HMP generally indicates that the polymer has not crosslinked. Crosslinking is a typical detrimental side reaction in non-terminated polymer cements. Another method used to verify termination was $^2$H NMR. Deuterium gas was used to terminate the living polymer. During the termination, samples were drawn from the reactor and subsequently submitted for NMR analysis. Polymer termination was essentially complete when there was no increase in deuterium incorporation in the polymer. The fourth method employed involved adding styrene monomer back to the terminated polymer. If any living ends are still existing after the sparge, they will polymerize the added monomer.

Example 1

A 34,400 molecular weight polybutadiene polymer ($B^-Li^+$) was made by anionic polymerization using sec-butyllithium as the initiator in a 7.6 litre autoclave. The polymerization took place in a mixture of cyclohexane and diethyl ether. The resulting polymer solution contained 20% polymer by weight.

At the end of the polymerization reaction, the polymer solution was transferred to another reactor containing 1500 g of hydrogen-sparged cyclohexane. This resulting solution contained 15% polymer. This solution was sparged with hydrogen for 5 minutes. The reactor temperature was approximately 50 °C. The reactor pressure was 2.7 bar (40 psig) and the hydrogen sparge rate was 1.0 SCFM.

The absence of HMP (high molecular weight polymer at greater than 34,400 molecular weight) in the gel permeation chromatography (GPC) can be used as supporting evidence to show that the run has been terminated. A non-terminated polymer could cross-link or air-couple to form HMP. The HMP peak was relatively small and typical for a terminated polymer.

Example 2

A styrene-butadiene-styrene ($S\text{-}B\text{-}S^-Li^+$) block copolymer 41,100 molecular weight was made by anionic polymerization using sec-butyllithium as the initiator in a 7.6 litre autoclave. The polymerization took place in a mixture of cyclohexane and diethyl ether. The resulting polymer solution contained 20% polymer by weight.

This solution was sparged with deuterium for 15 minutes. Deuterium was selected so that the deuterium concentration in the polymer could be measured over time using $^2$H NMR. The expected reaction follows:

$$S\text{-}B\text{-}S^-Li^+ + D_2 \rightarrow S\text{-}B\text{-}S\text{-}D + LiD$$

The reactor temperature was approximately 50 °C. The reactor pressure was held at 6.5 bar while sparging with deuterium. Samples were taken at 5, 10 and 15 minutes during the termination reaction. The orange styryllithium colour was present in the 5 minute sample, but not the 10 minute sample indicating

that termination occurred before 10 minutes.

The samples were then prepared by drying in a vacuum oven to remove the solvent. Deuterium concentrations were measured on the dried samples by $^2H$ NMR. Refer to Table I. The deuterium concentration increased and then leveled out after 10 minutes indicating that deuterium incorporation, i.e., termination, was achieved within 10 minutes.

Example 3

A 67,300 molecular weight polybutadiene polymer ($B^-Li^+$) containing 3% styrene randomly distributed was made by anionic polymerization using sec-butyllithium as the initiator in a 7.6 litre autoclave. The polymerization took place in a mixture of cyclohexane and diethyl ether. The resulting polymer solution contained 20% polymer by weight.

This solution was terminated in the same manner as Example 6 by sparging with deuterium for 15 minutes. The reactor temperature was approximately 70 °C. The reactor pressure was held at 6.5 bar while sparging with deuterium. Samples were taken at 5, 10 and 15 minutes during the termination reaction.

The samples were then prepared by drying in a vacuum oven to remove the solvent. Deuterium concentrations were measured on the dried samples by $^2H$ NMR. Refer to Table I. The deuterium concentration increased and then leveled out after 10 minutes indicating that the polymer was terminated within 10 minutes.

Table I

| Deuterium Results | | |
|---|---|---|
| | Example 6 S-B-S (micrograms/gram) | Example 7 Polybutadiene (micrograms/gram) |
| 0 min. Sample | 27 | 23 |
| 5 min. Sample | 69 | 48 |
| 10 min. Sample | 79 | 60 |
| 15 min. Sample | 82 | 59 |

Example 4

A 272 kg (600 lb) batch of styrene-butadiene-styrene ($S\text{-}B\text{-}S^-Li^+$) block copolymer 50,000 molecular weight was made by anionic polymerization using sec-butyllithium as the initiator in a 568 litre (150 gallon) reactor. The polymerization took place in a mixture of cyclohexane and diethyl ether. The resulting polymer solution contained 20% polymer by weight.

At the end of the polymerization reaction, the reactor temperature was approximately 60 °C. The reactor was sparged with hydrogen through the sample port for approximately 20 minutes. A colorimeter was used to determine when the termination was complete since $S\text{-}B\text{-}S^-Li^+$ has a distinct orange colour. The colorimeter reading still showed "colour" after 15 minutes of sparge time. At that time, the vent was closed and the reactor pressured up to 5.5 bar (80 psig) with hydrogen. The temperature was raised to decrease viscosity and improve mass transfer. The solution was mixed for 20 more minutes under 5.5 bar of $H_2$. During that time, the colorimeter reading dropped to baseline which reflects a terminated S-B-S-H polymer.

Example 5

An isoprene-styrene ($I\text{-}S\text{-}Li^+$) block copolymer 98,300 molecular weight was made by anionic polymerization using sec-butyllithium as the initiator in a 568 litre reactor. The polymerization took place in cyclohexane and the resulting polymer solution contained 20% polymer by weight.

At the end of the polymerization reaction, the reactor temperature was approximately 60 °C. The reactor was vented and repressured to 4 bar (60 psig) with hydrogen. The reactor was allowed to mix for 120 minutes. During that time, the colorimeter reading dropped to the baseline which reflects a terminated I-S-H polymer.

Example 6

An isoprene-styrene (I-S-$Li^+$) block copolymer 131,700 molecular weight was made by anionic polymerization using sec-butyllithium as the initiator in a 568 litre reactor. The polymerization took place in cyclohexane and the resulting polymer solution contained 20% polymer by weight.

At the end of the polymerization reaction, the reactor temperature was approximately 60 °C. The reactor was vented and repressured to 1.7 bar (25 psig) with hydrogen. The reactor was then heated to 70 °C and mixed for 15 minutes. Samples were taken and visually checked for colour. The colourless material indicated that the polymer had been terminated after the 15 minutes.

Example 7

A 44,300 molecular weight polyisoprene (I-$Li^+$) was made by anionic polymerization using sec-butyl lithium as the initiator. The polymerization took place in cyclohexane and the resulting polymer solution contained 20% polymer by weight.

At the end of the polymerization reaction, the reactor temperature was approximately 60 °C. The reactor was vented and hydrogen gas was admitted to the reactor at a rate sufficient to maintain 2.4-2.7 bar (35-40 psig) hydrogen in the reactor. The cement was sparged for 1 hour, then allowed to stand overnight with a 2.7 bar (40 psig) hydrogen cap. Samples were drawn into nitrogen sparged 0.1 kg (4 ounce) sample bottles containing styrene at 10, 25, and 60 minutes. For each sample, the amount of monomer consumed (added polymer growth) was measured by gel permeation chromotagraphy (GPC). For the 60 minute sample, the GPC showed no new monomer growth indicating termination.

Example 8

A 272 kg batch of polystyrene-polybutadiene-polystyrene (S-B-S-$Li^+$) block copolymer, 22,000 molecular weight, was made by anionic polymerization using sec-butyl lithium as the initiator in a 568 litre reactor. The polymerization took place in a mixture of cyclohexane and diethyl ether. The resulting polymer solution contained 20% polymer by weight.

At the end of the polymerization reaction, the reactor temperature was approximately 60 °C. The reactor was sparged with hydrogen through the sample port for approximately 15 minutes. The pressure of the hydrogen varied from 0.7 to 5.5 bar (10 to 80 psig). After this time, additional styrene monomer was added to the reactor to determine the extent to which active living lithium ends were still intact, i.e. those that will polymerize the added monomer. A sample was removed from the reactor at the 15 minute mark and terminated via the traditional alcohol addition. The amount of monomer consumed (added polymer growth) was measured by gel permeation chromotagraphy (GPC). The monomer growth indicated that 90% of the polymer was terminated at 15 minutes of hydrogen sparging.

Example 9

The same procedure was followed as in Example 8 except the hydrogen addition time was increased to 30 minutes. The pressure of hydrogen varied from 0.7 to 5.5 bar (10 to 80 psig). The temperature was 60 °C. After 30 minutes, styrene monomer was added to the reactor. A sample was removed from the reactor and terminated via traditional alcohol addition. Gel permeation chromotagraphy analysis showed no new monomer growth indicating that the living ends of the polymer were totally terminated with 30 minutes of hydrogen sparging.

**Claims**

**1.** A process for anionically polymerizing monomers with an anionic polymerization initiator in a suitable solvent thereby creating a living polymer and termination of the living polymer, which comprises terminating the polymerization by the addition of hydrogen or an isotope thereof as a terminating agent.

**2.** Process of claim 1 wherein the terminating agent is hydrogen.

**3.** The process of claims 1 and 2 wherein the monomer to be polymerized is selected from the group consisting of acrylamides, acrylonitriles, nitrobutenes, vinyl isocyanates, anhydrides, acrylates, methacrylates, vinyl pyridenes, carbodiimides, lactams, dienes, styrene and styrene derivatives.

4. The process of claim 3 wherein the anionic polymerization initiator is an organo alkali metal compound.

5. The process of claim 4 wherein the organo alkali metal compound is an organo lithium compound.

6. The process of claim 5 wherein the organo alkali metal compound is sec-butyllithium.

7. The process of claims 1-6 wherein the moncmer to be polymerized is a conjugated diolefin.

8. The process of claim 7 wherein the conjugated diolefin is selected from the group consisting of butadiene and isoprene.

9. The process of claims 1-8 wherein the monomers to be polymerized are conjugated diolefins and alkenyl aromatic hydrocarbons.

10. The process of claim 9 wherein the conjugated diolefins are selected from the group consisting of butadiene and isoprene and the alkenyl aromatic hydrocarbons are selected from the group consisting of styrene and styrene derivatives.

11. The process of claim 2 wherein the hydrogen contacts the polymer for at least 10 seconds.

12. The process of claim 2 wherein the hydrogen contacts the polymer for at least 20 minutes.

13. The process of claim 2 wherein the hydrogen addition is carried out by sparging the polymer solution with hydrogen.

14. The process of claim 2 wherein the hydrogen addition is carried out by dissolving hydrogen in a solution and then contacting the hydrogen solution with the polymer solution.

15. The process of claim 2 wherein the hydrogen addition is carried out by causing hydrogen to be absorbed into an absorption bed and then causing the polymer solution to flow through the absorption bed.

16. The process of claim 2 wherein the reaction temperature is 0-200 °C.

17. The process of claim 16 wherein the reaction temperature is 60-80 °C.

18. The process of claim 2 wherein the reactor pressure is 0.07-138 bar.

19. The process of claim 18 wherein the reaction pressure is 2.7-7 bar.

20. The process of claim 2 wherein the hydrogen addition is carried out by adding to the polymer a material which releases hydrogen when it decomposes and causing said hydrogen-releasing material to decompose.

## Patentansprüche

1. Ein Verfahren zum Anionisch-polymerisieren von Monomeren mit einem anionischen Polymerisierungsinitiators in einem geeigneten Lösungsmittel, wobei ein lebendes Polymer entsteht, und Beendigung des lebenden Polymers, das das Beendigen der Polymerisation durch Zugabe von Wasserstoff oder dessen Isotop als Beendigungsmittel umfaßt.

2. Verfahren des Anspruchs 1, wobei das Beendigungsmittel Wasserstoff ist.

3. Das Verfahren der Ansprüche 1 und 2, wobei das zu polymerisierende Polymer aus der Gruppe, bestehend aus Acrylamiden, Acrylnitrilen, Nitrobutenen, Vinylisocyanaten, Anhydriden, Acrylaten, Methacrylaten, Vinylpyridinen, Carbodiimiden, Lactamen, Dienen, Styrol und Styrolderivaten ausgewählt ist.

4. Das Verfahren des Anspruchs 3, wobei der anionische Polymerisationsinitiator eine organische Alkalimetallverbindung ist.

5. Das Verfahren des Anspruchs 4, wobei die organische Alkalimetallverbindung eine organische Lithiumverbindung ist.

6. Das Verfahren des Anspruchs 5, wobei die organische Alkalimetallverbindung sek.-Butyllithium ist.

7. Das Verfahren der Ansprüche 1 - 6, wobei das zu polymerisierende Monomere ein konjugiertes Diolefin ist.

8. Das Verfahren des Anspruchs 7, wobei das konjugierte Diolefin aus der Gruppe, bestehend aus Butadien und Isopren, ausgewählt ist.

9. Das Verfahren der Ansprüche 1 - 8, wobei die zu polymerisierenden Monomeren konjugierte Diolefine und aromatische Alkenylkohlenwasserstoffe sind.

10. Das Verfahren des Anspruchs 9, wobei die konjugierten Diolefine aus der Gruppe, bestehend aus Butadien und Isopren, ausgewählt sind und die aromatischen Alkenylkohlenwasserstoffe aus der Gruppe, bestehend aus Styrol und Styrolderivaten, ausgewählt sind.

11. Das Verfahren des Anspruchs 2, wobei der Wasserstoff mit dem Polymer für mindestens 10 Sekunden kontaktiert wird.

12. Das Verfahren des Anspruchs 2, wobei der Wasserstoff mit dem Polymer für mindestens 20 Minuten kontaktiert wird.

13. Das Verfahren des Anspruchs 2, wobei die Wasserstoffzugabe durch Besprühen der Polymerlösung mit Wasserstoff durchgeführt wird.

14. Das Verfahren des Anspruchs 2, wobei die Wasserstoffzugabe durch Lösen von Wasserstoff in einer Lösung und dann Kontaktieren der Wasserstofflösung mit einer Polymerlösung durchgeführt wird.

15. Das Verfahren des Anspruchs 2, wobei die Wasserstoffzugabe durch Veranlassen, daS der Wasserstoff in ein Absorptionsbett absorbiert wird, und dann Veranlassen, daß die Polymerlösung durch das Absorptionsbett fließt, durchgeführt wird.

16. Das Verfahren des Anspruchs 2, wobei die Reaktionstemperatur 0 - 200 °C beträgt.

17. Das Verfahren des Anspruchs 16, wobei die Reaktionstemperatur 60 - 80 °C beträgt.

18. Das Verfahren des Anspruchs 2, wobei der Reaktionsdruck 0,07 - 138 bar beträgt.

19. Das Verfahren des Anspruchs 18, wobei der Reaktionsdruck 2,7 - 7 bar beträgt.

20. Das Verfahren des Anspruchs 2, wobei die Wasserstoffzugabe durch Zufügen eines Stoffes zu dem Polymer, der Wasserstoff freisetzt, wenn er sich zersetzt, und Veranlassen besagten Wasserstoff freizusetzenden Stoffes, sich zu zersetzen, durchgeführt wird.

## Revendications

1. Procédé de polymérisation anionique de monomères à l'aide d'un activant anionique de polymérisation au sein d'un solvant approprié pour former ainsi un polymère vivant et la terminaison du polymère vivant, qui consiste à terminer la polymérisation par addition d'hydrogène ou d'un isotope de celui-ci à titre d'agent de terminaison.

2. Procédé selon la revendication 1, dans lequel l'agent de terminaison est l'hydrogène.

3. Procédé selon les revendications 1 et 2, dans lequel le monomère à polymériser est choisi parmi les acrylamides, les acrylonitriles, les nitrobutènes, les isocyanates de vinyle, les anhydrides, les acrylates, les méthacrylates, les vinyl-pyridines , les carbodiimides, les lactames, les diènes, le styrène et les dérivés du styrène.

4. Procédé selon la revendication 3, dans lequel l'activant de polymérisation anionique est un composé d'organo-métal alcalin.

5. Procédé selon la revendication 4, dans lequel le composé d'organo-métal alcalin est un composé d'organo-lithium.

6. Procédé selon la revendication 5, dans lequel le composé d'organo-métal alcalin est le s-butyllithium.

7. Procédé selon les revendications 1 à 6, dans lequel le monomère à polymériser est une dioléfine conjuguée.

8. Procédé selon la revendication 7, dans lequel la dioléfine conjuguée est le butadiène ou l'isoprène.

9. Procédé selon les revendications 1 à 8, dans lequel les monomères à polymériser sont des dioléfines conjuguées et des hydrocarbures alcénylaromatiques.

10. Procédé selon la revendication 9, dans lequel les dioléfines conjuguées sont choisies parmi le butadiène et l'isoprène et les hydrocarbures alcénylaromatiques sont choisis parmi le styrène et les dérivés du styrène.

11. Procédé selon la revendication 2, dans lequel l'hydrogène vient en contact avec le polymère pendant au moins 10 secondes.

12. Procédé selon la revendication 2, dans lequel l'hydrogène vient en contact avec le polymère pendant au moins 20 minutes.

13. Procédé selon la revendication 2, dans lequel on effectue l'addition d'hydrogène en diffusant de l'hydrogène sur la solution de polymère.

14. Procédé selon la revendication 2, dans lequel on effectue l'addition d'hydrogène en dissolvant l' hydrogène dans une solution et, ensuite, en mettant en contact la solution d'hydrogène avec la solution de polymère.

15. Procédé selon la revendication 2, dans lequel on effectue l'addition d'hydrogène en faisant absorber l'hydrogène par un lit d' absorption et, ensuite, en faisant passer la solution de polymère à travers ce lit d'absorption.

16. Procédé selon la revendication 2, dans lequel la température de réaction est de 0 à 200 °C.

17. Procédé selon la revendication 16, dans lequel la température de réaction est de 60 à 80 °C.

18. Procédé selon la revendication 2, dans lequel la pression dans le réacteur est de 0,07 à 138 bars.

19. Procédé selon la revendication 18, dans lequel la pression de réaction est de 2,7 à 7 bars.

20. Procédé selon la revendication 2, dans lequel on effectue l'addition d'hydrogène en ajoutant au polymère une matière qui dégage de l'hydrogène quand elle se décompose et en provoquant la décomposition de ladite matière dégageant de l'hydrogène.